# FASCICULE DE BREVET EUROPEEN

(11) **EP 1 945 587 B1**
(45) Date de publication et mention de la délivrance du brevet: **21.02.2018**
(21) Numéro de dépôt: 06831316.2
(22) Date de dépôt: 08.11.2006
(51) Int. Cl.: C03C 17/36, B32B 17/10

(54) **SUBSTRAT MUNI D'UN EMPILEMENT A PROPRIETES THERMIQUES.**
MIT EINEM STAPEL MIT WÄRMEEIGENSCHAFTEN AUSGESTATTETES SUBSTRAT
SUBSTRATE WHICH IS EQUIPPED WITH A STACK HAVING THERMAL PROPERTIES

(30) Priorité: 08.11.2005 FR 0553385
(43) Date de publication de la demande: 23.07.2008
(73) Titulaire: Saint-Gobain Glass France, 92400 Courbevoie (FR)
(72) Inventeur: MARTIN, Estelle, 75005 Paris (FR); NADAUD, Nicolas, 94250 Gentilly (FR); BELLIOT, Sylvain, 75012 Paris (FR); MATTMANN, Eric, 75013 Paris (FR); REUTLER, Pascal, 75019 Paris (FR)
(74) Mandataire: Saint-Gobain Recherche
(86) Numéro de dépôt international: PCT/FR2006/051151
(87) Numéro de publication internationale: WO 2007/054655

(56) Documents cités:
- EP-A- 0 638 528
- EP-A- 0 877 005
- EP-A1- 1 010 677
- WO-A1-03/010105
- WO-A2-02/062713
- DE-A1- 4 422 830
- DE-C1- 19 732 977
- US-A- 5 993 617

## Description

L'invention concerne les substrats transparents, notamment en matériau rigide minéral comme le verre, lesdits substrats étant revêtus d'un empilement de couches minces comprenant au moins une couche fonctionnelle de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive (vitrages dits « de contrôle solaire ») et/ou diminuer la quantité d'énergie dissipée vers l'extérieur (vitrages dits « bas émissifs ») entraînés par l'importance toujours croissante des surfaces vitrées dans les bâtiments et les habitacles de véhicules.

Un type d'empilement de couches connu pour conférer aux substrats de telles propriétés est constitué d'au moins une couche fonctionnelle métallique, comme une couche à base d'argent, qui se trouve disposée entre deux revêtements en matériau diélectrique du type oxyde ou nitrure métallique. Cet empilement est généralement obtenu par une succession de dépôts effectués par une technique utilisant le vide comme la pulvérisation cathodique éventuellement assistée par champ magnétique. Peuvent aussi être prévus deux revêtement très fins, disposés un de chaque côté de la couche d'argent, le revêtement sous-jacent en tant que couche d'accrochage, de nucléation et/ou de protection lors d'un éventuel traitement thermique postérieurement au dépôt, et le revêtement sus-jacent en tant que revêtement de protection ou « sacrificiel » afin d'éviter l'altération de l'argent si la couche d'oxyde qui la surmonte est déposée par pulvérisation cathodique en présence d'oxygène et/ou si l'empilement subit postérieurement au dépôt un traitement thermique.

Il est ainsi connu des brevets européens EP-0 611 213, EP-0 678 484 et EP-0 638 528 des empilements de ce type, à une ou deux couches fonctionnelles métalliques à base d'argent.

On demande actuellement de plus en plus que ces vitrages bas-émissifs ou de protection solaire présentent aussi des caractéristiques inhérentes aux substrats eux-mêmes, notamment esthétiques (qu'ils puissent être bombés), mécaniques (qu'ils soient plus résistants), ou de sécurité (qu'ils ne blessent pas en cas de bris). Cela nécessite de faire subir aux substrats verriers des traitements thermiques connus en eux-mêmes du type bombage, recuit, trempe et/ou des traitements liés à la réalisation d'un vitrage feuilleté.

Il faut alors adapter l'empilement de couches pour préserver l'intégrité des couches fonctionnelles du type couches en argent, notamment prévenir leur altération. Une première solution consiste à augmenter significativement l'épaisseur des fines couches métalliques évoquées précédemment et qui entourent les couches fonctionnelles : on s'assure ainsi que tout l'oxygène susceptible de diffuser à partir de l'atmosphère ambiante et/ou de migrer à partir du substrat en verre à haute température soit « capté » par ces couches métalliques en les oxydant, sans atteindre la (les) couche(s) fonctionnelle(s).

Ces couches sont parfois nommées « couches de blocage » ou « couches de bloqueur ».

On pourra se reporter notamment à la demande de brevet EP-A-0 506 507 pour la description d'un empilement « trempable » avec une couche d'argent disposée entre une couche d'étain et une couche de nickel-chrome. Mais il est clair que le substrat revêtu avant traitement thermique n'était considéré que comme un produit « semi-fini », les caractéristiques optiques le rendaient fréquemment inutilisable tel quel. Il était donc nécessaire de développer et fabriquer, en parallèle, deux types d'empilement de couches, l'un pour les vitrages non bombés/non trempés, l'autre pour les vitrages destinés à être trempés ou bombés, ce qui peut être compliqué en termes de gestion de stocks et de production notamment.

Une amélioration proposée dans le brevet EP-0 718 250 a permis de s'affranchir de cette contrainte ; l'enseignement de ce document consistant à concevoir un empilement de couches minces tel que ses propriétés optiques, ainsi que thermiques, restaient pratiquement inchangées, que le substrat une fois revêtu de l'empilement subisse ou non un traitement thermique. On parvient à un tel résultat en combinant deux caractéristiques :
- d'une part, on prévoit au-dessus de la (des) couche(s) fonctionnelle(s) une couche en un matériau apte à faire barrière à la diffusion de l'oxygène à haute température, matériau qui lui-même ne subit pas à haute température une modification chimique ou structurelle qui entraînerait une modification de ses propriétés optiques ; Il peut ainsi s'agir de nitrure de silicium Si₃N₄ ou de nitrure d'aluminium AlN,
- d'autre part, la (les) couche(s) fonctionnelle(s) est (sont) directement au contact du revêtement diélectrique sous-jacent, notamment en oxyde de zinc ZnO.

Une couche unique de blocage (ou revêtement de blocage monocouche) est, de préférence en outre, prévue sur la ou les couche(s) fonctionnelle(s). Cette couche de blocage est à base d'un métal choisi parmi le niobium Nb, le tantale Ta, le titane Ti, le chrome Cr ou le nickel Ni ou d'un alliage à partir d'au moins deux de ces métaux, notamment d'un alliage de niobium et de tantale (Nb/Ta), de niobium et de chrome (Nb/Cr) ou de tantale et de chrome (Ta/Cr) ou de nickel et de chrome (Ni/Cr).

Si cette solution permet effectivement de conserver au substrat après traitement thermique un niveau de T_{L} et un aspect en réflexion extérieure assez constants, elle est encore susceptible d'amélioration.

Par ailleurs, la recherche d'une meilleure résistivité, c'est-à-dire d'une résistivité plus faible, de l'empilement est une recherche constante.

L'état de la couche fonctionnelle a fait l'objet de nombreuses études car il est, bien évidemment, un facteur majeur de la résistivité de la couche fonctionnelle.

Les inventeurs ont choisi d'explorer une autre voie dans l'amélioration de la résistivité : la nature de l'interface entre la couche fonctionnelle et la couche de blocage immédiatement adjacente.

L'art antérieur connaît des demandes internationales de brevet N° WO 02/062713 et WO 03/10105, ainsi que de la demande de brevet européen EP 1010677 des exemples avec une couche de sous-blocage ou de sur-blocage qui est métallique, en Ti.

L'art antérieur connaît de la demande internationale de brevet N° WO 2004/058660 une solution selon laquelle le revêtement de sur-blocage est une monocouche de NiCrOₓ et peut présenter un gradient d'oxydation. Selon ce document, la partie de la couche de blocage en contact avec la couche fonctionnelle est moins oxydée que la partie de cette couche la plus éloignée de la couche fonctionnelle en utilisant une atmosphère de dépôt particulière.

Le but de l'invention est de parvenir à remédier aux inconvénients de l'art antérieur, en mettant au point un nouveau type d'empilement à couche(s) fonctionnelle(s) du type de ceux décrits précédemment, empilement qui puisse subir des traitements thermiques à haute température du type bombage, trempe ou recuit en préservant sa qualité optique et sa tenue mécanique et en présentant une résistivité améliorée.

L'invention constitue en particulier une solution adéquate à la problématique habituelle de l'application visée et qui consiste à élaborer un compromis entre les qualités thermiques et les qualités optiques de l'empilement de couches minces.

En effet, une amélioration de la résistivité, des propriétés de réflexion dans l'infrarouge et de l'émissivité d'un empilement a normalement pour effet une dégradation de la transmission lumineuse et des couleurs en réflexion de cet empilement.

L'invention a ainsi pour objet, dans son acception la plus large, un substrat verrier transparent selon la revendication 1.

L'invention a ainsi consisté à prévoir un revêtement de blocage au moins bicouches pour la couche fonctionnelle, ce revêtement de blocage étant situé sous (revêtement de « sous-blocage ») et/ou sur (revêtement de « sur-blocage ») la couche fonctionnelle.

Les inventeurs se sont ainsi rendus compte que l'état, et même le degré d'oxydation de la couche immédiatement en contact avec la couche fonctionnelle pouvaient avoir une influence majeure sur la résistivité de la couche.

L'invention ne s'applique pas seulement à des empilements ne comportant qu'une seule couche « fonctionnelle », disposée entre deux revêtements. Elle s'applique aussi à des empilements comportant une pluralité de couches fonctionnelles, notamment deux couches fonctionnelles alternées avec trois revêtements, ou de trois couches fonctionnelles alternées avec quatre revêtements, voire encore quatre couches fonctionnelles alternées avec cinq revêtements.

Dans le cas d'un empilement pluri-couches fonctionnelles, au moins une, et de préférence chaque, couche fonctionnelle est muni d'un revêtement de sous blocage et/ou de sur-blocage selon l'invention, c'est-à-dire d'un revêtement de blocage comprenant au moins deux couches distinctes, ces couches distinctes étant déposées à l'aide de cibles distinctes et différentes.

La couche d'interface, au contact de la couche fonctionnelle est un oxyde d'un métal choisi parmi l'un au moins des métaux suivants Ti, V, Mn, Fe, Co, Cu, Zn, Zr, Hf, Al, Nb, Ni, Cr, Mo, Ta, W, ou d'un oxyde d'un alliage à base d'au moins un de ces matériaux. Cette couche d'interface est déposée sous forme non métallique.

La couche métallique du revêtement de blocage, au contact de la couche d'interface, est constituée d'un matériau choisi parmi l'un au moins des métaux suivants Ti, V, Mn, Co, Cu, Zn, Zr, Hf, Al, Nb, Ni, Cr, Mo, Ta, ou d'un alliage à base d'au moins un de ces matériaux.

Dans une variante particulière, cette couche métallique est à base de titane.

La couche métallique du revêtement de blocage, qui elle est déposée sous forme métallique, n'est, bien sûr, pas une couche métallique fonctionnelle à propriétés de réflexion dans l'infrarouge et/ou dans le rayonnement solaire.

Dans une autre variante particulière, la couche d'interface est un oxyde d'un métal ou de métaux qui est (ou sont) présent(s) dans la couche métallique adjacente.

Dans une autre variante particulière, la couche d'interface est partiellement oxydée. Elle n'est donc pas déposée sous forme stoechiométrique, mais sous forme sous-stoechiométrique, du type MOₓ, où M représente le matériau et x est un nombre inférieur à la stoechiométrie de l'oxyde du matériau. X est de préférence compris entre 0,75 fois et 0,99 fois la stoechiométrie normale de l'oxyde.

Dans une variante particulière, la couche d'interface est à base de TiOₓ et x peut être en particulier tel que 1,5 ≤ x ≤ 1,98 ou 1,5 < x < 1,7, voire 1,7 ≤ x ≤ 1,95.

La couche d'interface présente, de préférence, une épaisseur géométrique inférieure à 5 nm et de préférence comprise entre 0,5 et 2 nm et la couche métallique présente, de préférence, une épaisseur géométrique inférieure à 5 nm et de préférence comprise entre 0,5 et 2 nm.

Le revêtement de blocage présente, de préférence, une épaisseur géométrique inférieure à 10 nm et de préférence comprise entre 1 et 4 nm.

La fonctionnalité d'une couche de sur-blocage métallique, par exemple en Ti, est de protéger la couche fonctionnelle métallique sous-jacente pendant le dépôt de la couche suivante, c'est-à-dire la couche déposée juste après le revêtement de sur-blocage, en particulier lorsque cette couche est un oxyde, comme par exemple une couche à base de ZnO.

Il se trouve qu'une couche protectrice métallique, parfois appelée couche « sacrificielle », en tant que couche unique d'un revêtement de blocage et en particulier de sur-blocage, par exemple en Ti, améliore fortement les propriétés de la conduction d'électrons de la couche fonctionnelle. On observe ainsi avant et après le traitement thermique, une légère diminution globale de la résistivité avec l'augmentation de l'épaisseur de la couche en titane métallique entre la couche fonctionnelle et celle d'oxyde, jusqu'à une épaisseur optimale.

Toutefois, aller au delà de l'épaisseur optimale mène à une augmentation de la résistivité tant avant qu'après le traitement thermique.

Pour des échantillons avant traitement thermique, ce comportement est inattendu car l'augmentation de l'épaisseur du métal déposé favorise, dans un modèle simple, le transport électronique. Ainsi un mécanisme plus complexe doit être considéré, qui est n'est pas réellement connu pour le moment.

Il est possible de prouver que la réflectivité des électrons à l'interface entre la couche fonctionnelle et le revêtement de blocage influence cette augmentation inattendue de résistivité pour des épaisseurs importantes de revêtement de blocage.

L'effet sous-jacent à l'invention peut être confirmé par l'analyse chimique locale effectuée au contact de la couche fonctionnelle et du revêtement de blocage en utilisant la microscopie électronique en transmission (TEM) combinée avec la spectroscopie de déperdition d'énergie d'électron (EELS). Cette analyse a prouvé expérimentalement la formation d'un gradient d'oxygène le long de l'épaisseur du revêtement de blocage.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherché(s) pour le vitrage une fois sa fabrication achevée.

Ainsi pour des vitrages destinés à équiper des véhicules, des normes imposent que le pare-brise ait une transmission lumineuse T_{L} d'environ 75 % selon certaines normes ou 70 % selon d'autres normes, un tel niveau de transmission n'étant pas exigé pour les vitrages latéraux ou le toit-auto, par exemple. Les verres teintés que l'on peut retenir sont par exemple ceux qui, pour une épaisseur de 4 mm, présentent une T_{L} de 65 % à 95 %, une transmission énergétique T_{E} de 40 % à 80 %, une longueur d'onde dominante en transmission de 470 nm à 525 nm associée à une pureté de transmission de 0,4 % à 6 % selon l'Illuminant D₆₅, ce que l'on peut « traduire » dans le système de colorimétrie (L, a*, b*) par des valeurs de a* et b* en transmission respectivement comprises entre -9 et 0 et entre -8 et +2.

Pour des vitrages destinés à équiper des bâtiments, le vitrage présente, de préférence, une transmission lumineuse T_{L} d'au moins 75% voire plus pour des applications « bas-émissif », et une transmission lumineuse T_{L} d'au moins 40% voire plus pour des applications « contrôle solaire ».

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut aussi présenter une structure de vitrage feuilleté dit asymétrique, associant un substrat rigide de type verre à au moins une feuille de polymère de type polyuréthane à propriétés d'absorbeur d'énergie, éventuellement associée à une autre couche de polymères à propriétés « auto-cicatrisantes ». Pour plus de détails sur ce type de vitrage, on pourra se reporter notamment aux brevets EP-0 132 198, EP-0 131 523, EP-0 389 354. Le vitrage peut alors présenter une structure de type verre/empilement de couches minces/feuille(s) de polymère.

Dans une structure feuilletée, le substrat porteur de l'empilement est de préférence en contact avec une feuille de polymère.

Les vitrages selon l'invention sont aptes à subir un traitement thermique sans dommage pour l'empilement de couches minces. Ils sont donc éventuellement bombés et/ou trempés.

Le vitrage peut être bombé et/ou trempé en étant constitué d'un seul substrat, celui muni de l'empilement. On parle alors de vitrage « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement étant bombé et/ou trempé. Il est préférable dans une configuration de vitrage multiple que l'empilement soit disposé de manière à être tourné du côté de la lame de gaz intercalaire.

Lorsque le vitrage est monolithique ou en vitrage multiple du type double-vitrage ou vitrage feuilleté, au moins le substrat porteur de l'empilement peut être en verre bombé ou trempé, le substrat pouvant être bombé ou trempé avant ou après le dépôt de l'empilement.

L'invention concerne également le procédé de fabrication des substrats selon l'invention, qui consiste à déposer l'empilement de couches minces sur son substrat, notamment en verre, par une technique sous vide du type pulvérisation cathodique éventuellement assistée par champ magnétique.

Il est possible ensuite d'effectuer sur le substrat revêtu un traitement thermique de bombage/trempe ou recuit sans dégradation de sa qualité optique et/ou mécanique.

Il n'est toutefois pas exclu que la première ou les premières couches puissent être déposée(s) par une autre technique, par exemple par une technique de décomposition thermique de type pyrolyse.

Dans le procédé selon l'invention, chaque couche du revêtement de blocage est déposée par pulvérisation cathodique d'une cible de composition différente de la cible utilisée pour le dépôt de la couche adjacente au moins du revêtement de blocage.

La couche d'interface est, de préférence, déposée à partir d'une cible céramique, dans une atmosphère non oxydante (c'est-à-dire sans introduction volontaire d'oxygène) constituée de préférence de gaz noble (He, Ne, Xe, Ar, Kr).

La couche métallique est, de préférence, déposée à partir d'une cible métallique, dans une atmosphère inerte (c'est-à-dire sans introduction volontaire d'oxygène ou d'azote) constituée de gaz noble (He, Ne, Xe, Ar, Kr).

Les détails et caractéristiques avantageuses de l'invention ressortent des exemples non limitatifs suivants, illustrés à l'aide des figures ci-jointes :
- la figure 1 illustre un empilement monocouche fonctionnelle dont la couche fonctionnelle est revêtue d'un revêtement de blocage selon l'invention ;
- la figure 2 illustre un empilement monocouche fonctionnelle dont la couche fonctionnelle est déposée sur un revêtement de blocage selon l'invention ;
- la figure 3 illustre la résistivité de trois exemples, l'exemple 1 non conforme à l'invention, et les exemples 2 et 3 conformes à l'invention, en fonction de l'épaisseur de la couche en métal dans le revêtement de sur-blocage de l'empilement de la figure 1 ;
- la figure 4 illustre la résistivité de trois exemples, l'exemple 1 non conforme à l'invention, et les exemples 4 et 5 conformes à l'invention, en fonction de l'épaisseur de la couche en métal dans le revêtement de sur-blocage de l'empilement de la figure 1 ;
- la figure 5 illustre la résistivité de trois exemples, l'exemple 11 non conforme à l'invention, et les exemples 12 et 13 conformes à l'invention, en fonction de l'épaisseur de la couche en métal dans le revêtement de sous-blocage de l'empilement de la figure 2 ;
- la figure 6 illustre la résistivité de trois exemples, l'exemple 11 non conforme à l'invention, et les exemples 14 et 15 conformes à l'invention, en fonction de l'épaisseur de la couche en métal dans le revêtement de sous-blocage de l'empilement de la figure 3 ;
- la figure 7 illustre la transmission lumineuse avant traitement thermique de deux exemples, l'exemple 11 non conforme à l'invention, et l'exemple 13 conforme à l'invention, en fonction de l'épaisseur de la couche en métal dans le revêtement de sous-blocage de l'empilement de la figure 2 ;
- la figure 8 illustre la transmission lumineuse après traitement thermique de deux exemples, l'exemple 11 non conforme à l'invention, et l'exemple 13 conforme à l'invention, en fonction de l'épaisseur de la couche en métal dans le revêtement de sous-blocage de l'empilement de la figure 2 ;
- la figure 9 illustre la variation de transmission lumineuse entre des mesures effectuées avant le traitement thermique et des mesures effectuées après le traitement thermique pour les deux exemples 11 et 13, en fonction de l'épaisseur de la couche en métal dans le revêtement de sous-blocage ;
- la figure 10 illustre un empilement monocouche fonctionnelle dont la couche fonctionnelle est déposée sur un revêtement de sur-blocage selon l'invention et sous un revêtement de sous-blocage selon l'invention ;
- la figure 11 illustre un empilement bicouches fonctionnelles dont chaque couche fonctionnelle est déposée sur un revêtement de sous-blocage selon l'invention ; et
- la figure 12 illustre un empilement quadricouches fonctionnelles dont chaque couche fonctionnelle est déposée sur un revêtement de sous-blocage selon l'invention.

Les figures d'empilements ne respectent pas les proportions entre les épaisseurs des différentes couches afin que leur lecture en soit facilitée.

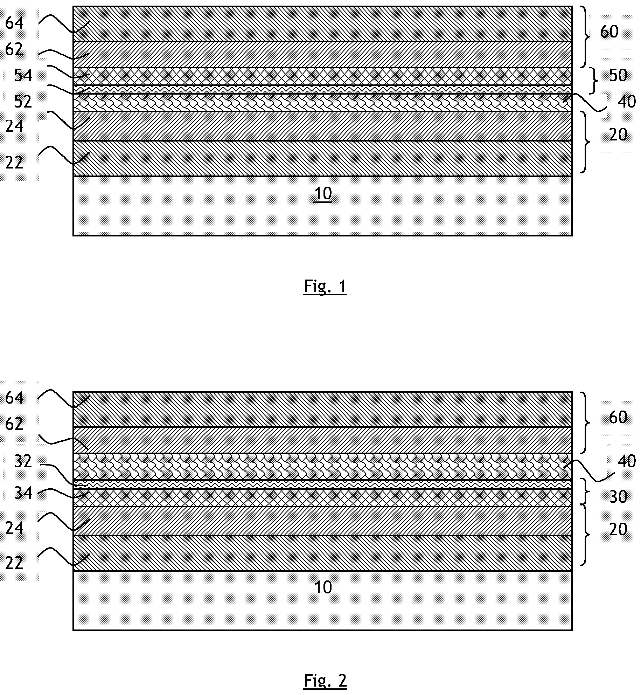

Les figures 1 et 2 illustrent des schémas d'empilements monocouche fonctionnelle, respectivement lorsque la couche fonctionnelle est munie d'un revêtement de sur-blocage et lorsque la couche fonctionnelle est munie d'un revêtement de sous-blocage.

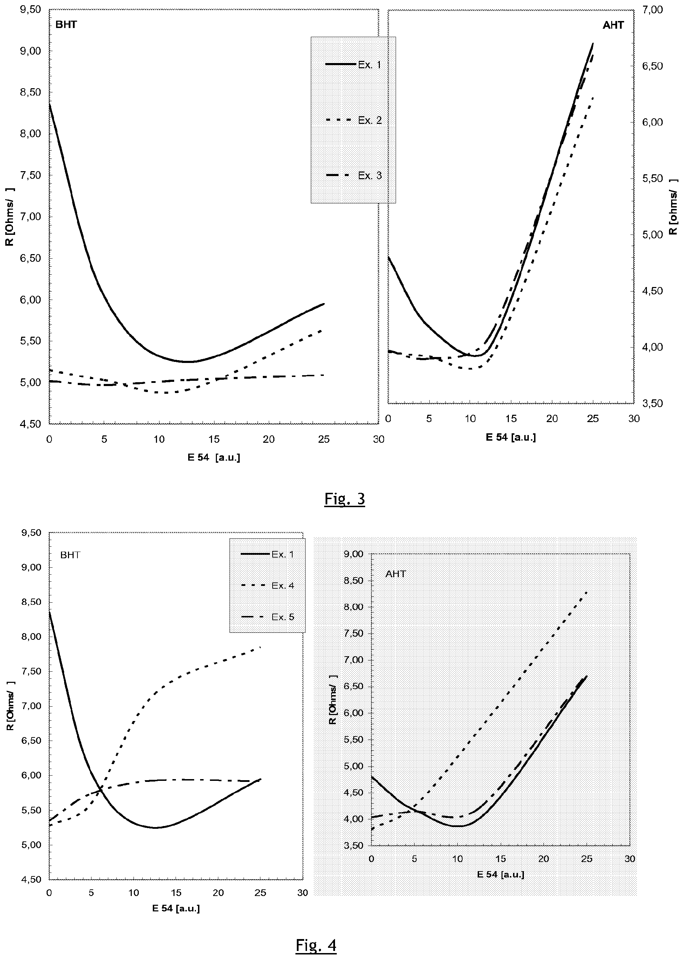

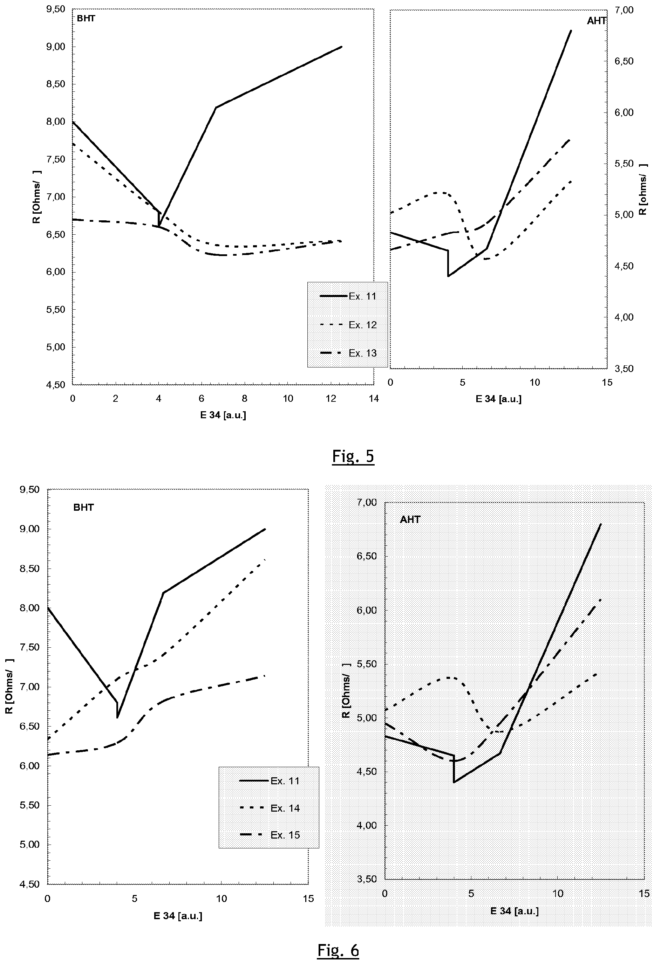

Les figures 3 à 6 illustrent les résistivités des empilements respectivement :
- des exemples 1 à 3 pour la figure 3, réalisés selon la figure 1
- des exemples 1, 4 et 5 pour la figure 4, réalisés selon la figure 1,
- des exemples 11 à 13 pour la figure 5, réalisés selon la figure 2, et
- des exemples 11, 14 et 15 pour la figure 6, réalisés selon la figure 2.

Dans les exemples 1 à 15 qui suivent, l'empilement est déposé sur le substrat 10, qui est un substrat en verre silico-sodo-calcique clair de 2,1 mm d'épaisseur. L'empilement comporte une couche fonctionnelle unique à base d'argent 40.

Sous la couche fonctionnelle 40 se trouve un revêtement diélectrique 20 constitué d'une pluralité de couches superposées à base de matériau diélectrique référencées 22, 24 et sur la couche fonctionnelle 40 se trouve un revêtement diélectrique 60 constitué d'une pluralité de couches superposées à base de matériau diélectrique référencées 62, 64.

Dans les exemples 1 à 15 :
- les couches 22 sont à base de Si₃N₄ et présentent une épaisseur physique de 20 nm ;
- les couches 24 sont à base de ZnO et présentent une épaisseur physique de 8 nm ;
- les couches 62 sont à base de ZnO et présentent une épaisseur physique de 8 nm ;
- les couches 64 sont à base de Si₃N₄ et présentent une épaisseur physique de 20 nm ;
- les couches 40 sont à base d'argent et présentent une épaisseur physique de 10 nm.

Seules changent, dans les différents exemples 1 à 15, la nature et l'épaisseur du revêtement de blocage.

Pour les exemples 1 et 11, qui sont des contre-exemples, le revêtement de blocage respectivement 50, 30 comporte une seule couche respectivement 54, 34 en métal, ici du titane métallique ni oxydé, ni nitruré, cette couche étant déposée dans une atmosphère d'argon pur. Il n'y a donc pas de couche d'interface, respectivement 52, 32.

Dans le cas des exemples 2 et 12, qui sont des exemples selon l'invention, le revêtement de blocage respectivement 50, 30 comporte une couche respectivement 54, 34 en métal, ici du titane déposé dans une atmosphère d'argon pur, et une couche d'interface, respectivement 52, 32 en oxyde, ici de l'oxyde de titane, d'une épaisseur de 1 nm, déposée dans une atmosphère d'argon pur à l'aide d'une cathode en céramique.

Dans le cas des exemples 3 et 13, qui sont des exemples selon l'invention, le revêtement de blocage respectivement 50, 30 comporte une couche respectivement 54, 34 en métal, ici du titane déposé dans une atmosphère d'argon pur, et une couche d'interface, respectivement 52, 32 en oxyde, ici de l'oxyde de titane, d'une épaisseur de 2 nm, déposée dans une atmosphère d'argon pur à l'aide d'une cathode en céramique.

Dans le cas des exemples 4 et 14, qui sont des exemples selon l'invention, le revêtement de blocage respectivement 50, 30 comporte une couche respectivement 54, 34 en métal, ici du titane déposé dans une atmosphère d'argon pur, et une couche d'interface, respectivement 52, 32 en oxyde, ici de l'oxyde de zinc, d'une épaisseur de 1 nm, déposée dans une atmosphère d'argon pur à l'aide d'une cathode en céramique.

Dans le cas des exemples 5 et 15, qui sont des exemples selon l'invention, le revêtement de blocage respectivement 50, 30 comporte une couche respectivement 54, 34 en métal, ici du titane déposé dans une atmosphère d'argon pur, et une couche d'interface, respectivement 52, 32 en oxyde, ici de l'oxyde de zinc, d'une épaisseur de 2 nm, déposée dans une atmosphère d'argon pur à l'aide d'une cathode en céramique.

Dans tous ces exemples, les dépôts successifs des couches de l'empilement s'effectuent par pulvérisation cathodique assistée par champ magnétique, mais toute autre technique de dépôt peut être envisagée à partir du moment où elle permet un bon contrôle et une bonne maîtrise des épaisseurs des couches à déposer.

L'installation de dépôt comprend au moins une chambre de pulvérisation munie de cathodes équipées de cibles en matériaux appropriés sous lesquels le substrat 1 passe successivement. Ces conditions de dépôt pour chacune des couches sont les suivantes :
- les couches 40 à base d'argent sont déposées à l'aide d'une cible en argent, sous une pression de 0,8 Pa dans une atmosphère d'argon pur,
- les couches 24 et 62 à base de ZnO sont déposées par pulvérisation réactive à l'aide d'une cible de zinc, sous une pression de 0,3 Pa et dans une atmosphère argon/oxygène,
- les couches 22 et 64 à base de Si₃N₄ sont déposées par pulvérisation réactive à l'aide d'une cible en silicium dopée au à l'aluminium, sous une pression de 0,8 Pa dans une atmosphère argon/azote.

Les densités de puissance et les vitesses de défilement du substrat 10 sont ajustées de manière connue pour obtenir les épaisseurs de couches voulues.

Pour chacun des exemples, différentes épaisseurs de couches métalliques 54, 34 ont été déposées, puis la résistance de chaque empilement a été mesurée, avant un traitement thermique (BHT) et après ce traitement thermique (AHT).

Le traitement thermique appliqué a constitué à chaque fois en un réchauffement à 620°C pendant 5 minutes, puis un refroidissement rapide à l'air ambiant (environ 25 °C).

Les résultats des mesures de résistance ont été transformés en résistivités R en ohms par carré et ont été illustrés pour les mesures de résistivités avant traitement thermique dans la partie gauche des figures 3 et 4 et pour les mesures de résistivité après traitement thermique dans la partie droite des figures 3 et 4.

L'épaisseur E54 et E34 de la couche métallique respectivement 54 et 34 est exprimée en une unité arbitraire (a.u.) correspondant à 1000 divisé par la vitesse du substrat dans l'enceinte de dépôt en cm/min. La calibration exacte de l'épaisseur déposée n'a pas été réalisée mais les épaisseurs correspondant à 25 a.u. sont de toute façon de l'ordre de deux nanomètres au regard des paramètres utilisés.

### Revêtement de sur-blocage 50

Pour la couche additionnelle d'interface en TiOₓ, sur la partie gauche de la figure 3, la comparaison des valeurs de résistivité avant traitement thermique de l'exemple 1 avec les valeurs de résistivité avant traitement thermique des exemples 2 et 3 montre clairement une amélioration de la résistivité des exemples 2 et 3 avec des valeurs de résistivité bien inférieures à celles de l'exemple 1.

La présence de la couche additionnelle de TiOₓ déposée sur la couche fonctionnelle métallique à base d'argent et sous la couche de titane métallique améliore donc la résistivité avant ou sans traitement thermique.

Avec une épaisseur de TiOₓ de 2 nm (ex. 3), la résistivité obtenue est quasiment constante et très faible ; avec une épaisseur de TiOₓ de 1 nm (ex. 2), la résistivité obtenue est également faible, quoique moins constante.

Sur la partie droite de la figure 3, la comparaison des valeurs de résistivité après traitement thermique de l'exemple 1 avec les valeurs de résistivité après traitement thermique des exemples 2 et 3 montre également clairement une amélioration de la résistivité dans le cas des exemples 2 et 3 avec des valeurs de résistivité bien inférieure à celles obtenues avec l'exemple 1 pour des épaisseurs fines de titane métallique (inférieures à 12,5 a.u.).

Pour les épaisseurs plus grandes de titane métallique (supérieures à 12,5 a.u.), correspondant à une présence résiduelle de titane non oxydé dans la couche d'interface, on observe une augmentation de la résistivité similaire à la configuration titanique métallique simple (ex. 1).

Pour la couche additionnelle d'interface en ZnOₓ, sur la partie gauche de la figure 4, la comparaison des valeurs de résistivité avant traitement thermique de l'exemple 1 avec les valeurs de résistivité avant traitement thermique des exemples 4 et 5 montre clairement une amélioration de la résistivité des exemples 4 et 5 avec des valeurs de résistivité bien inférieures à celles de l'exemple 1 pour des épaisseurs fines de titane métallique (inférieures à 7 a.u.).

La présence de la couche additionnelle de ZnOₓ déposée sur la couche fonctionnelle métallique à base d'argent et sous la couche de titane métallique améliore donc la résistivité avant ou sans traitement thermique pour ces faibles épaisseurs.

Avec une épaisseur de ZnOₓ de 2 nm (ex. 5), la résistivité obtenue est quasiment constante et faible ; avec une épaisseur de TiOₓ de 1 nm (ex. 4), la résistivité obtenue est moins constante.

Sur la partie droite de la figure 4, la comparaison des valeurs de résistivité après traitement thermique de l'exemple 1 avec les valeurs de résistivité après traitement thermique des exemples 4 et 5 montre également clairement une amélioration de la résistivité dans le cas des exemples 4 et 5 avec des valeurs de résistivité bien inférieure à celles obtenues avec l'exemple 1 pour des épaisseurs fines de titane métallique (inférieures à 5 a.u.).

Pour les épaisseurs plus grandes de titane métallique (supérieures à 5 a.u.), on observe une augmentation de la résistivité assez similaire à la configuration titanique métallique simple (ex. 1).

Ces résultats prouvent l'influence forte de l'état d'oxydation à l'interface avec la couche métallique fonctionnelle à base d'argent.

Ainsi, pour le revêtement de sur-blocage, un état oxydé à cette interface avec la couche à base d'argent améliore la résistivité alors qu'un état métallique est néfaste pour la résistivité.

Pour s'en assurer, nous avons par la suite procédé à un dépôt identique à celui des exemples 3 et 5 à ceci près que l'atmosphère de dépôt de la couche d'interface 52 en TiOₓ et ZnOₓ a été modifiée : d'une atmosphère non oxydante, nous sommes passé à une atmosphère très légèrement oxydante avec une flux d'oxygène de 1 sccm pour un flux d'argon de 150 sccm.

Nous avons observé qu'avec un état pourtant seulement très légèrement oxydant la résistivité de l'empilement pour les faibles épaisseurs de titane métallique (inférieures à 12,5 a.u.) de la couche d'interface était encore bien plus grande que dans le cas de l'exemple 1.

D'une manière étonnante, le dépôt d'une couche de titanique métallique sur cette couche si oxydée à l'interface avec la couche fonctionnelle permet de récupérer les valeurs habituelles de résistivité. Le mécanisme fondamental de cette réduction de la résistivité avec l'interface avec l'argent oxydée n'est pas complètement compris. Il est possible qu'il se produise une réaction chimique entre l'oxyde et le titane métallique et/ou une diffusion de l'oxygène.

Un profil en spectrométrie de perte d'énergie des électrons (EELS) a été réalisé à travers le revêtement de blocage pour évaluer sur quelle profondeur le signal de l'oxygène est détectable, c'est-à-dire sur quelle épaisseur le bloqueur est oxydé. Cette expérience a montré qu'à proximité de la couche fonctionnelle un signal est détecté et que le signal de l'oxygène n'est plus détecté à partir de la moitié de l'épaisseur du revêtement de blocage en s'éloignant de la couche fonctionnelle.

### Revêtement de sous-blocage 30

Le cas du revêtement de sous-blocage est plus complexe que celui de sur-blocage car ce revêtement influence l'hétéro-épitaxie de l'argent sur la couche sous-jacente d'oxyde, en l'occurrence à base d'oxyde de zinc.

Contrairement au revêtement de sur-blocage, le revêtement de sous-blocage n'est en général pas exposé à une atmosphère de plasma contenant de l'oxygène. Ceci implique que lorsque le revêtement de sous-blocage est en titane métallique non oxydé et/ou non nitruré, il ne sera bien sûr pas oxydé ni nitruré à l'interface avec la couche fonctionnelle à base d'argent.

Le dépôt d'une couche additionnelle d'interface en oxyde entre la couche de blocage métallique et la couche fonctionnelle métallique est ainsi la seule manière de commander le contenu d'oxygène à l'interface entre le revêtement de sous-blocage et la couche métallique fonctionnelle.

Pour la couche additionnelle d'interface en TiOₓ, sur la partie gauche de la figure 5, la comparaison des valeurs de résistivité avant traitement thermique de l'exemple 11 avec les valeurs de résistivité avant traitement thermique des exemples 12 et 13 montre clairement une amélioration de la résistivité des exemples 12 et 13 pour les plus grandes épaisseurs de titane métallique (supérieures à 4 a.u.), avec des valeurs de résistivité bien inférieures à celles de l'exemple 11.

La présence de la couche additionnelle de TiOₓ déposée sur la couche de titane métallique et sous la couche fonctionnelle métallique à base d'argent améliore donc la résistivité avant ou sans traitement thermique.

Avec une épaisseur de TiOₓ de 2 nm (ex. 13), la résistivité obtenue est quasiment constante et très faible ; avec une épaisseur de TiOₓ de 1 nm (ex. 12), la résistivité obtenue est également faible, quoique moins constante.

Sur la partie droite de la figure 5, la comparaison des valeurs de résistivité après traitement thermique de l'exemple 11 avec les valeurs de résistivité après traitement thermique des exemples 12 et 13 montre également une amélioration de la résistivité dans le cas des exemples 12 et 13 avec des valeurs de résistivité bien inférieures à celles obtenues avec l'exemple 11 pour des épaisseurs plus grandes de titane métallique (supérieures à 6 a.u.).

Pour les épaisseurs fines de titane métallique (inférieures à 6 a.u.), on observe une résistivité similaire à la configuration titanique métallique simple (ex. 11).

Pour la couche additionnelle d'interface en ZnOₓ, sur la partie gauche de la figure 6, la comparaison des valeurs de résistivité avant traitement thermique de l'exemple 11 avec les valeurs de résistivité avant traitement thermique des exemples 14 et 15 montre clairement une amélioration de la résistivité des exemples 14 et 15 pour les plus grandes épaisseurs de titane métallique (supérieures à 5 a.u.), avec des valeurs de résistivité inférieures à celles de l'exemple 11.

La présence de la couche additionnelle de ZnOₓ déposée sur la couche de titane métallique et sous la couche fonctionnelle métallique à base d'argent améliore donc la résistivité avant ou sans traitement thermique.

Avec une épaisseur de ZnOₓ de 2 nm (ex. 15), la résistivité obtenue est quasiment constante et faible ; avec une épaisseur de ZnOₓ de 1 nm (ex. 14), la résistivité obtenue est également faible, quoique moins constante.

Sur la partie droite de la figure 6, la comparaison des valeurs de résistivité après traitement thermique de l'exemple 11 avec les valeurs de résistivité après traitement thermique des exemples 14 et 15 montre également une amélioration de la résistivité dans le cas des exemples 14 et 15 avec des valeurs de résistivité inférieures à celles obtenues avec l'exemple 11 pour des épaisseurs plus grandes de titane métallique (supérieures à 8 a.u.).

Pour les épaisseurs fines de titane métallique (inférieures à 8 a.u.), on observe une résistivité assez similaire à la configuration titanique métallique simple (ex. 11).

Ces résultats prouvent également l'influence forte de l'état d'oxydation à l'interface avec la couche métallique fonctionnelle à base d'argent.

Ainsi, pour le revêtement de sous-blocage aussi, un état oxydé à cette interface avec la couche à base d'argent améliore la résistivité alors qu'un état métallique est néfaste pour la résistivité.

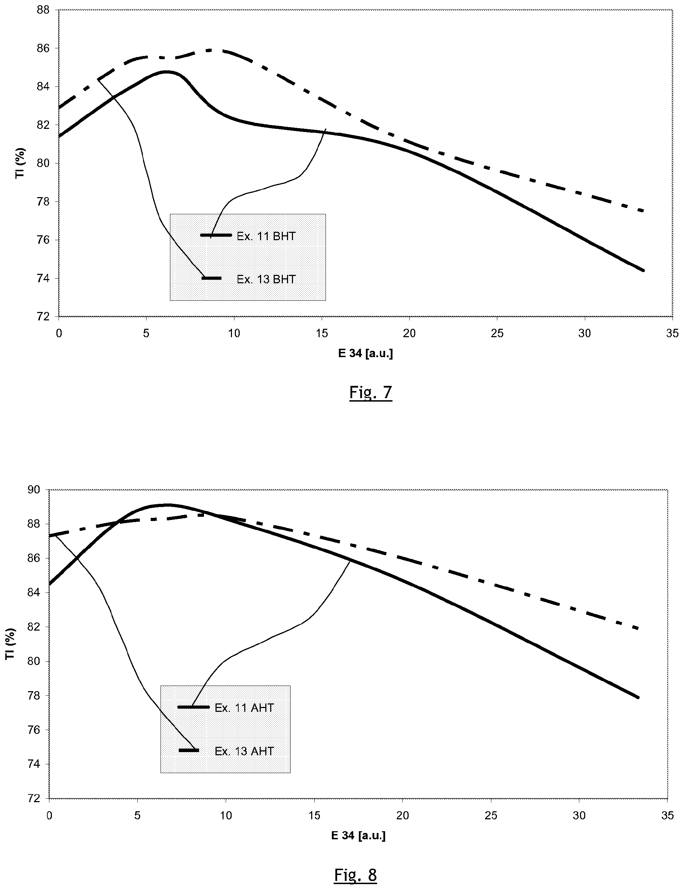

Comme visible par ailleurs sur les figures 7 et 8, la présence de la couche d'interface en TiOₓ 32 améliore la transmission lumineuse, tant avant le traitement thermique (figure 7) que après ce traitement (figure 8), quelle que soit l'épaisseur de la couche sous-jacente de titane métallique 34, sauf sur une petite plage d'épaisseur de titane métallique, après traitement thermique.

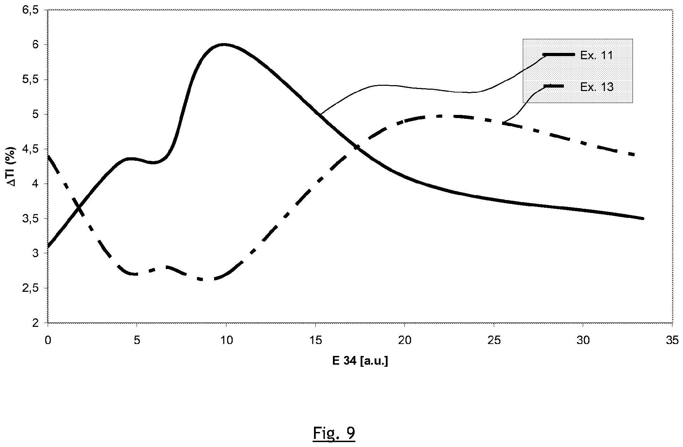

En outre, pour de faibles épaisseurs de la couche de titane métallique 34 (supérieure à zéro mais inférieure à 18 a.u.), la différence de transmission lumineuse avant traitement thermique et après traitement thermique est faible, comme visible sur la figure 9. Ce qui signifie que sur une surface vitrée constituée de vitrages incorporant des substrats selon l'invention présentant des couches 34 dans cette plage d'épaisseur et dont certains substrats seulement ont subi un traitement thermique, il sera très difficile de distinguer ceux qui ont subi in traitement thermique de ceux qui n'en n'ont pas subi en observant la transmission lumineuse de tous les vitrages.

Enfin, les mesures de colorimétrie en réflexion côté empilement ont montré que dans le cas de l'exemple 13, les valeurs de a* et b* dans le système LAB restaient dans la « boîte de couleur » préférée, c'est-à-dire avec des valeurs de a* entre 0 et 5 et des valeurs de b* entre -3.5 et -9 alors que dans le cas de l'exemple 11, les valeurs de a* étaient comprises entre 0 et 9 et les valeurs de b* étaient comprises entre -2 et -7, pour les même plages d'épaisseur de la couche de titane métallique 34.

Les résultats de résistance mécanique aux différents tests habituellement appliqués aux empilements de couche minces (test Taber, test Erichsen brosse, ...) ne sont pas très bon, mais ces résultats sont améliorés par la présence d'une couche de protection.

### Revêtement de sous-blocage 30 et de sur-blocage 50

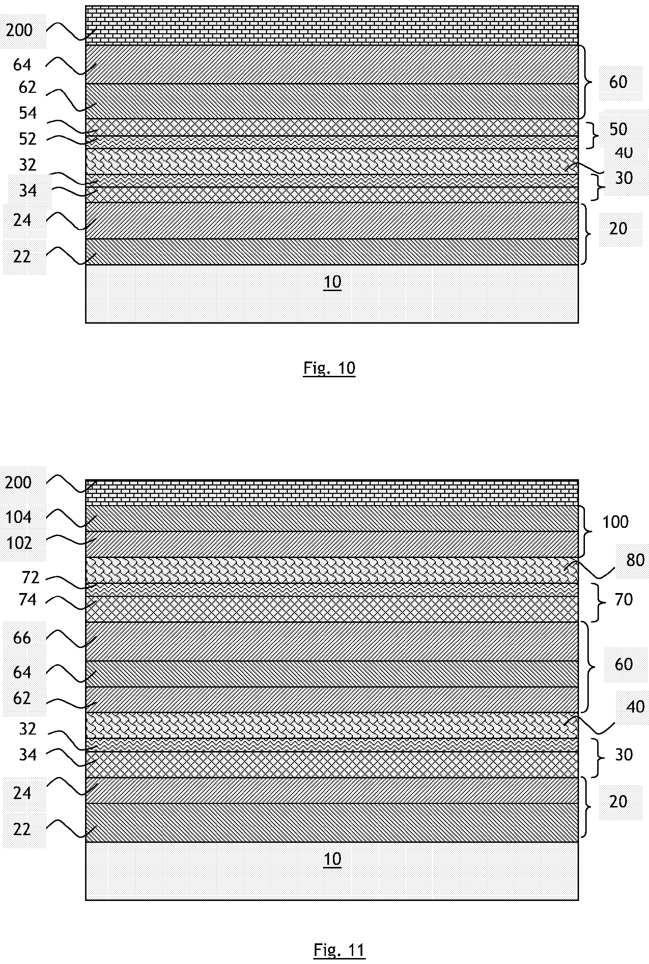

La figure 10 illustre une variante de l'invention correspondant à un empilement monocouche fonctionnelle, dont la couche fonctionnelle 40 est munie d'un revêtement de sous-blocage 30 et d'un revêtement de sur-blocage 50.

On a constaté que les effets obtenus pour les empilements des exemples 2, 3 et 12, 13 d'une part et 5, 6 et 15, 16 d'autre part étaient cumulables et que la résistivité de l'empilement était encore améliorée.

Pour améliorer la résistance mécanique, l'empilement est recouvert d'une couche de protection 200 à base d'oxyde mixte, comme un oxyde mixte d'étain et de zinc.

Des exemples à plusieurs couches fonctionnelles ont également été réalisés. Ils conduisent aux mêmes conclusions que précédemment.

La figure 11 illustre ainsi une variante à deux couches métalliques fonctionnelles à base d'argent 40 ; 80 ; et de trois revêtements diélectriques 20 ; 60; 100; lesdits revêtements étant composés d'une pluralité de couches, respectivement 22, 24; 62, 64, 66; 102, 104, de manière à ce que chaque couche fonctionnelle soit disposée entre au moins deux revêtements diélectriques.
- les couches 40 ; 80 ; à base d'argent sont déposées à l'aide d'une cible en argent, sous une pression de 0,8 Pa dans une atmosphère d'argon pur,
- les couches 24 ; 62, 66 ; 102, sont à base de ZnO et sont déposées par pulvérisation réactive à l'aide d'une cible de zinc, sous une pression de 0,3 Pa et dans une atmosphère argon/oxygène,
- les couches 22, 64, et 104, sont à base de Si₃N₄ et sont déposées par pulvérisation réactive à l'aide d'une cible en silicium dopée à l'aluminium, sous une pression de 0,8 Pa dans une atmosphère argon/azote.

L'empilement est recouvert d'une couche de protection 200 à base d'oxyde mixte, comme un oxyde mixte d'étain et de zinc.

Chaque couche fonctionnelle 40, 80 est déposée sur un revêtement de sous-blocage 30, 70 constitué respectivement d'une part d'une couche d'interface 32, 72 par exemple en oxyde de titane TiOₓ immédiatement en contact avec ladite couche fonctionnelle, et d'autre part, d'une couche métallique 34, 74 en un matériau métallique, par exemple en titane métallique, immédiatement en contact avec ladite couche d'interface 32, 72.

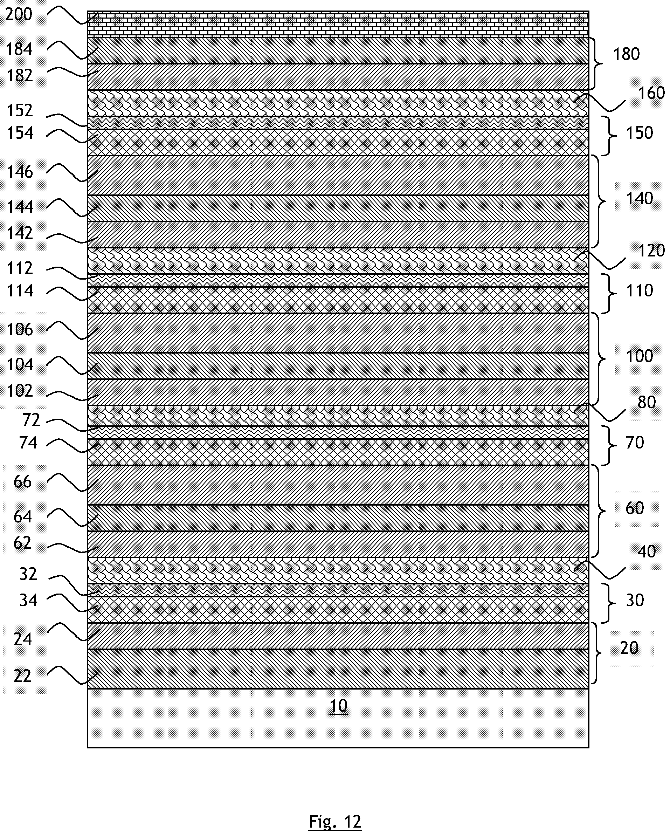

La figure 12 illustre par ailleurs une variante à quatre couches métalliques fonctionnelles à base d'argent 40; 80; 120; 160; et de cinq revêtements diélectriques 20 ; 60 ; 100 ; 140 ; 180 ; lesdits revêtements étant composés d'une pluralité de couches, respectivement 22, 24 ; 62, 64, 66 ; 102, 104, 106; 142, 144, 146; 182, 184; de manière à ce que chaque couche fonctionnelle soit disposée entre au moins deux revêtements diélectriques.
- les couches 40; 80; 120; 160 à base d'argent sont déposées à l'aide d'une cible en argent, sous une pression de 0,8 Pa dans une atmosphère d'argon pur,
- les couches 24 ; 62, 66 ; 102, 106 ;142, 146 ; 182 sont à base de ZnO et sont déposées par pulvérisation réactive à l'aide d'une cible de zinc, sous une pression de 0,3 Pa et dans une atmosphère argon/oxygène,
- les couches 22, 64, 104, 144 et 184 sont à base de Si₃N₄ et sont déposées par pulvérisation réactive à l'aide d'une cible en silicium dopée au bore ou à l'aluminium, sous une pression de 0,8 Pa dans une atmosphère argon/azote.

L'empilement est également recouvert d'une couche de protection 200 à base d'oxyde mixte, comme un oxyde mixte d'étain et de zinc.

Chaque couche fonctionnelle 40 ; 80 ; 120; 160 est déposée sur un revêtement de sous-blocage 30 ; 70; 110 ; 150 constitué respectivement d'une part d'une couche d'interface 32 ; 72 ; 112 ; 152, par exemple en oxyde de titane TiOₓ immédiatement en contact avec ladite couche fonctionnelle, et d'autre part, d'une couche métallique 34 ; 74; 114; 154 en un matériau métallique, par exemple en titane métallique, immédiatement en contact respectivement avec ladite couche d'interface 32 ; 72 ; 112 ; 152.

## Revendications

1. Substrat (10) transparent, muni d'un empilement de couches minces comportant une alternance de « n » couches fonctionnelles (40) métalliques à propriétés de réflexion dans l'infrarouge et/ou dans le rayonnement solaire, à base d'argent ou d'alliage métallique contenant de l'argent, et de « (n + 1) » revêtements diélectriques (20, 60), avec n ≥ 1, lesdits revêtements étant composés d'une ou d'une pluralité de couches (22, 24, 62, 64), dont au moins une en matériau diélectrique, de manière à ce que chaque couche fonctionnelle (40) soit disposée entre au moins deux revêtements diélectriques (20, 60), ***caractérisé en ce qu**'*au moins une couche fonctionnelle (40) comporte un revêtement de blocage (30, 50) constitué :
∘ d'une part d'une couche d'interface (32, 52) immédiatement en contact avec ladite couche fonctionnelle, cette couche d'interface étant en un matériau qui n'est pas un métal, la couche d'interface (32, 52) étant un oxyde d'un métal choisi parmi l'un au moins des métaux suivants Ti, V, Mn, Fe, Co, Cu, Zn, Zr, Hf, Al, Nb, Ni, Cr, Mo, Ta, W ou d'un oxyde d'un alliage à base d'au moins un de ces matériaux
∘ d'autre part, d'au moins une couche métallique (34, 54) en un matériau métallique, immédiatement en contact avec ladite couche d'interface (32, 52) et constituée d'un matériau choisi parmi l'un des métaux suivants Ti, V, Mn, Co, Cu, Zn, Zr, Hf, Al, Nb, Ni, Cr, Mo, Ta, ou d'un alliage à base d'au moins un de ces matériaux.

2. Substrat (10) selon la revendication 1, ***caractérisé en ce que*** l'empilement comporte deux couches fonctionnelles (40, 80) alternées avec trois revêtements (20, 60, 100).

3. Substrat (10) selon l'une quelconque des revendications précédentes, ***caractérisé en ce que*** la couche métallique (34, 54) est à base de titane.

4. Substrat (10) selon l'une quelconque des revendications précédentes, ***caractérisé en ce que*** la couche d'interface (32, 52) est un oxyde d'un métal ou de métaux qui est (ou sont) présent(s) dans la couche métallique (34, 54).

5. Substrat (10) selon l'une quelconque des revendications précédentes, ***caractérisé en ce que*** la couche d'interface (32, 52) est partiellement oxydée.

6. Substrat (10) selon l'une quelconque des revendications précédentes, ***caractérisé en ce que*** la couche d'interface (32, 52) est en TiOₓ avec 1,5 ≤ x < 1,99.

7. Substrat (10) selon l'une quelconque des revendications précédentes, ***caractérisé en ce que*** la couche d'interface (32, 52) présente une épaisseur géométrique inférieure à 5 nm et de préférence comprise entre 0,5 et 2 nm.

8. Substrat (10) selon l'une quelconque des revendications précédentes, ***caractérisé en ce que*** la couche métallique (34, 54) présente une épaisseur géométrique inférieure à 5 nm et de préférence comprise entre 0,5 et 2 nm.

9. Substrat (10) selon l'une quelconque des revendications précédentes, ***caractérisé en ce que*** le revêtement de blocage (30, 50) présente une épaisseur géométrique inférieure à 10 nm et de préférence comprise entre 1 et 4 nm.

10. Vitrage incorporant au moins un substrat (10) selon l'une quelconque des revendications précédentes, éventuellement associé à au moins un autre substrat.

11. Vitrage selon la revendication précédente monté en monolithique ou en vitrage multiple du type double-vitrage ou vitrage feuilleté, ***caractérisé en ce qu***'***au*** moins le substrat porteur de l'empilement est en verre bombé ou trempé.

12. Procédé de fabrication du substrat (10) selon l'une quelconque des revendications 1 à 9, ***caractérisé en ce qu'on*** dépose l'empilement de couches minces sur le substrat (10) par une technique sous vide du type pulvérisation cathodique éventuellement assistée par champ magnétique, et ***en ce que*** chaque couche du revêtement de blocage (30, 50) est déposée par pulvérisation cathodique d'une cible de composition différente de la cible utilisée pour le dépôt de la couche adjacente au moins.

13. Procédé selon la revendication précédente, ***caractérisé en ce que*** la couche d'interface (32, 52) est déposée à partir d'une cible céramique, dans une atmosphère non oxydante.

## Patentansprüche

1. Transparentes Substrat (10), das mit einem Stapel dünner Schichten ausgestattet ist, aufweisend eine Abfolge von "n" metallischen funktionellen Schichten (40) mit Reflexionseigenschaften im Infrarot und/oder bei Sonnenstrahlung auf der Basis von Silber oder Metalllegierung, die Silber enthält, und von "(n + 1)" dielektrischen Beschichtungen (20, 60) mit n ≥ 1, wobei die Beschichtungen von einer oder von einer Vielzahl von Schichten (22, 24, 62, 64) zusammengesetzt sind, davon mindestens eine aus dielektrischem Material, so dass jede funktionelle Schicht (40) zwischen mindestens zwei dielektrischen Beschichtungen (20, 60) angeordnet ist, ***dadurch gekennzeichnet, dass*** mindestens eine funktionelle Schicht (40) eine Blockadebeschichtung (30, 50) aufweist, die gebildet ist:
∘ zum einen von einer Übergangsschicht (32, 52) unmittelbar im Kontakt mit der funktionellen Schicht, wobei diese Übergangsschicht aus einem Material ist, das kein Metall ist, wobei die Übergangsschicht (32, 52) ein Oxid eines Metalls ist, das aus mindestens einem der folgenden Metalle Ti, V, Mn, Fe, Co, Cu, Zn, Zr, Hf, Al, Nb, Ni, Cr, Mo, Ta, W oder einem Oxid einer Legierung auf der Basis von mindestens einem dieser Materialien ausgewählt ist,
∘ zum anderen von mindestens einer metallischen Schicht (34, 54) aus einem metallischen Material unmittelbar im Kontakt mit der Übergangsschicht (32, 52) und gebildet von einem Material, das aus einem der folgenden Metalle Ti, V, Mn, Co, Cu, Zn, Zr, Hf, Al, Nb, Ni, Cr, Mo, Ta oder einer Legierung auf der Basis von mindestens einem dieser Materialien ausgewählt ist.

2. Substrat (10) nach Anspruch 1, ***dadurch gekennzeichnet, dass*** der Stapel zwei mit drei Beschichtungen (20, 60, 100) abwechselnde funktionellen Schichten (40, 80) aufweist.

3. Substrat (10) nach einem der vorangehenden Ansprüche, ***dadurch gekennzeichnet, dass*** die metallische Schicht (34, 54) auf der Basis von Titan ist.

4. Substrat (10) nach einem der vorangehenden Ansprüche, ***dadurch gekennzeichnet, dass*** die Übergangsschicht (32, 52) ein Oxid eines Metalls oder von Metallen ist, das / die in der metallischen Schicht (34, 54) vorhanden ist / sind.

5. Substrat (10) nach einem der vorangehenden Ansprüche, ***dadurch gekennzeichnet, dass*** die Übergangsschicht (32, 52) teilweise oxidiert ist.

6. Substrat (10) nach einem der vorangehenden Ansprüche, ***dadurch gekennzeichnet, dass*** die Übergangsschicht (32, 52) aus TiOₓ mit 1,5 ≤ x < 1,99 ist.

7. Substrat (10) nach einem der vorangehenden Ansprüche, ***dadurch gekennzeichnet, dass*** die Übergangsschicht (32, 52) eine geometrische Stärke unter 5 nm und vorzugsweise zwischen 0,5 und 2 nm inklusive aufweist.

8. Substrat (10) nach einem der vorangehenden Ansprüche, ***dadurch gekennzeichnet, dass*** die metallische Schicht (34, 54) eine geometrische Stärke unter 5 nm und vorzugsweise zwischen 0,5 und 2 nm inklusive aufweist.

9. Substrat (10) nach einem der vorangehenden Ansprüche, ***dadurch gekennzeichnet, dass*** die Blockadebeschichtung (30, 50) eine geometrische Stärke unter 10 nm und vorzugsweise zwischen 1 und 4 nm inklusive aufweist.

10. Verglasung, die mindestens ein Substrat (10) nach einen der vorangehenden Ansprüche inkorporiert, eventuell in Kombination mit mindestens einem anderen Substrat.

11. Verglasung nach vorangehendem Anspruch, die monolithisch oder als Mehrfachverglasung vom Typ Doppelverglasung oder Verbundverglasung aufgebaut ist, ***dadurch gekennzeichnet, dass*** mindestens das tragende Substrat des Stapels aus gewölbtem oder gehärtetem Glas ist.

12. Verfahren zur Herstellung des Substrats (10) nach einem der Ansprüche 1 bis 9, ***dadurch gekennzeichnet, dass*** der Stapel dünner Schichten auf das Substrat (10) mittels einer Vakuumtechnik vom Type Kathodenzerstäubung, eventuell unterstützt durch Magnetfeld, aufgebracht wird, und ***dadurch, dass*** jede Schicht der Blockadebeschichtung (30, 50) mittels Kathodenzerstäubung eines Festkörpers unterschiedlicher Zusammensetzung als der Festkörper, der mindestens für das Aufbringen der benachbarten Schicht verwendet wird, aufgebracht wird.

13. Verfahren nach vorangehendem Anspruch, ***dadurch gekennzeichnet, dass*** die Übergangsschicht (32, 52) ausgehend von einem keramischen Festkörper in einer nicht oxidativen Atmosphäre aufgebracht wird.

## Claims

1. A transparent glass substrate (10), provided with a thin-film multilayer coating comprising an alternation of n metallic functional layers (40) having reflection properties in the infrared and/or in solar radiation, based on silver or on a metal alloy containing silver, and (n+1) dielectric films (20, 60), where n ≥ 1, said films being composed of a layer or a plurality of layers (22, 24, 62, 64), including at least one made of a dielectric material, so that each functional layer (40) is placed between at least two dielectric films (20, 60), ***characterized* in *that*** at least one functional layer (40) includes a blocker film (30, 50) consisting of:
∘ on the one hand, an interface layer (32, 52) immediately in contact with said functional layer, this interface layer being made of a material that is not a metal; the interface layer (32, 52) being an oxide of a metal chosen from at least one of the following metals: Ti, V, Mn, Fe, Co, Cu, Zn, Zr, Hf, Al, Nb, Ni, Cr, Mo, Ta, W, or from an oxide of an alloy based on at least one of these materials and
∘ on the other hand, at least one metal layer (34, 54) made of a metallic material, immediately in contact with said interface layer (32, 52) and consisting of a material chosen from at least one of the following metals: Ti, V, Mn, Co, Cu, Zn, Zr, Hf, Al, Nb, Ni, Cr, Mo, Ta, or of an alloy based on at least one of these materials.

2. The substrate (10) as claimed in claim 1, ***characterized in that*** the multilayer coating comprises two functional layers (40, 80) alternating with three films (20, 60, 100).

3. The substrate (10) as claimed in one of the preceding claims, ***characterized in that** th*e metallic layer (34, 54) is based on titanium.

4. The substrate (10) as claimed in one of the preceding claims, ***characterized in that*** the interface layer (32, 52) is an oxide of a metal (or metals) that is (or are) present in the metallic layer (34, 54).

5. The substrate (10) as claimed in any one of the preceding claims, ***characterized in that** t*he interface layer (32, 52) is partially oxidized.

6. The substrate (10) as claimed in any one of the preceding claims, ***characterized in that*** the interface layer (32, 52) is made of TiOₓ where 1.5 ≤ x ≤ 1.99.

7. The substrate (10) as claimed in any one of the preceding claims, ***characterized in that*** the interface layer (32, 52) has a geometric thickness of less than 5 nm and preferably between 0.5 and 2 nm.

8. The substrate (10) as claimed in any one of the preceding claims, ***characterized* in *that*** the metallic layer (34, 54) has a geometric thickness of less than 5 nm and preferably between 0.5 and 2 nm.

9. The substrate (10) as claimed in any one of the preceding claims, ***characterized in that*** the blocker film (30, 50) has a geometric thickness of less than 10 nm and preferably between 1 and 4 nm.

10. Glazing incorporating at least one substrate (10) as claimed in any of the preceding claims, optionally combined with at least one other substrate.

11. The glazing as claimed in the preceding claim, mounted as monolithic glazing or as multiple glazing of the double-glazing type or laminated glazing, **characterized in that** at least the substrate bearing the multilayer coating is made of curved or toughened glass.

12. A process for manufacturing the substrate (10) as claimed in any one of claims 1 to 9, ***characterized in that*** the thin-film multilayer coating is deposited on the substrate (10) by a vacuum technique of sputtering, possibly magnetron sputtering type, ***and in that*** each layer of the blocker film (30, 50) is deposited by sputtering from a target having a different composition from the target used for depositing at least the adjacent layer.

13. The process as claimed in the preceding claim, ***characterized in that*** the interface layer (32, 52) is deposited using a ceramic target in a nonoxidizing atmosphere.
